# EUROPÄISCHE PATENTSCHRIFT

(11) **EP 3 069 952 B1**
(45) Veröffentlichungstag und Bekanntmachung des Hinweises auf die Patenterteilung: **03.05.2017**
(21) Anmeldenummer: 15160078.0
(22) Anmeldetag: 20.03.2015
(51) Int. Cl.: B61L 1/16, G01L 1/24

(54) **ACHSZÄHLVERFAHREN UND ACHSZÄHLVORRICHTUNG**
AXLE COUNTING METHOD AND AXLE COUNTING DEVICE
PROCÉDÉ DE COMPTAGE D'AXE ET DISPOSITIF COMPTEUR D'AXE

(43) Veröffentlichungstag der Anmeldung: 21.09.2016
(73) Patentinhaber: Thales Deutschland GmbH, 71254 Ditzingen (DE)
(72) Erfinder: Müller, Mathias, Dr., 81541 München (DE); Oldewurtel, Kassen, 71706 Markgröningen (DE); Klemm, Rainer, 71711 Steinheim (DE)
(74) Vertreter: Kohler Schmid Möbus Patentanwälte

(56) Entgegenhaltungen:
- EP-A2- 2 112 047
- WO-A1-2005/093971
- CN-A- 101 863 278

## Beschreibung

### Hintergrund der Erfindung

Die Erfindung betrifft ein Achszählverfahren für schienengebundene Fahrzeuge umfassend: eine Einkopplung von Licht in mindestens eine Sensorfaser, wobei die Sensorfaser mindestens ein an einer Schiene montiertes Faser-Bragg-Gitter umfasst, wobei jedes Faser-Bragg-Gitter ein Reflexionsspektrum (Intensitätsverlauf der vom Faser-Bragg-Gitter reflektierten Lichtleistung in Abhängigkeit von der Wellenlänge) mit einem Reflexionspeak bei einer Bragg-Wellenlänge mit einer Halbwertsbreite aufweist, und Detektion des von zwei voneinander beabstandeten Faser-Bragg-Gittern reflektierten Lichts, wodurch jeweils ein Schubspannungssignal der Schiene erhalten wird.

Ein derartiges Verfahren ist aus der noch nicht veröffentlichten Patentanmeldung DE 10 2014 100 654.4 bekannt.

Es sind Achszählsysteme bekannt, bei denen an einem Zählpunkt vorbeifahrende Achsen mittels Induktion detektiert werden. Problematisch hierbei ist, dass elektromagnetische Felder, bspw. von am Zug befestigten Klimaanlagen, zu Störungen bzw. Fehlzählungen führen können.

WO 2005/093971 A1 beschreibt ein Zugüberwachungssystem, bei dem am Gleis befestigte Sensorfasern zur Achszählung eingesetzt werden. Durch Einkopplung von Licht in den Lichtwellenleiter (Sensorfaser) wird dem Faser-Bragg-Gitter Licht zugeführt, wobei Wellenlängen, die innerhalb der Filterbandbreite um die Bragg-Wellenlänge liegen, reflektiert werden. Die Bragg-Wellenlänge ist allgemein definiert als λ_{B}=n_{eff}·2Λ=n_{eff}·λ. Darin ist n_{eff} der effektive Brechungsindex und Λ die Gitterperiode des Faser-Bragg-Gitters. Durch eine einwirkende Kraft wird die Sensorfaser und damit das Faser-Bragg-Gitter gedehnt und die Reflexions- bzw. Transmissionswellenlänge des Faser-Bragg-Gitters ändert sich, so dass abhängig von der Dehnung des Faser-Bragg-Gitters Licht unterschiedlicher Wellenlänge reflektiert wird und einer Auswerte- und Analyseeinheit zugeführt werden kann. Die einzelnen Faser-Bragg-Gitter sind in einem Abstand von 2.5m montiert. Die einzelnen Faser-Bragg-Gitter weisen unterschiedliche Bragg-Wellenlängen auf, wobei der Unterschied der Bragg-Wellenlängen größer sein muss als die Änderung der Bragg-Wellenlänge der entsprechenden Faser-Bragg-Gitter aufgrund von Belastungen.

Die noch nicht veröffentlichte Patentanmeldung DE 10 2014 100 654.4 beschreibt ein Schienenmesssystem zum Messen einer mechanischen Größe, die auf einer Schiene einwirkt, mittels faseroptischer Sensoren. Die dort verwendeten Faser-Bragg-Gitter werden unter einem Winkel von ±30° bis ±60°, insbesondere ±45°, relativ zur neutralen Faser an die Schiene angebracht. Dies bietet den Vorteil, dass von der faseroptischen Sensoreinheit Schubverformungen erfasst werden, die zu einer positiven oder negativen Dehnung führen, die nicht parallel zur neutralen Faser verlaufen.

Nachteilig an den bekannten Anordnungen ist, dass die Empfindlichkeit nicht ausreichend ist, um jede Achse zuverlässig zu detektieren, so dass das für Züge benötigte Sicherheitslevel (SIL4) nicht gewährleistet ist, da die Signale die aus der Schubspannungsmessung entstehen, sich nicht dafür eignen, eine Schwellwertauswertung durchzuführen,.

### Aufgabe der Erfindung

Es ist Aufgabe der Erfindung ein Achszählverfahren vorzuschlagen, das einerseits wenig störanfällig ist insbesondere bzgl. elektromagnetischer Störungen und andererseits eine ausreichende Empfindlichkeit aufweist, um das benötigte Sicherheitslevel zu erfüllen.

### Beschreibung der Erfindung

Diese Aufgabe wird erfindungsgemäß dadurch gelöst, dass folgende Verfahrensschritte vorgesehen sind:
- Erzeugen eines Schubspannungs-Differenzsignals aus den beiden erhaltenen Schubspannungssignalen;
- Erzeugung eines Radsignals innerhalb einer Signalverarbeitungseinheit wenn das Schubspannungs-Differenzsignal einen festgelegten oberen Grenzwert überschreitet oder einen festgelegten unteren Grenzwert unterschreitet.

Erfindungsgemäß wird ein Schubspannungsdifferenzsignal, also ein Signal, mit Hilfe dessen auf den zeitlichen Verlauf der Differenz zweier Schubspannungen an zwei voneinander beanstandeten Sensorstellen geschlossen werden kann, erzeugt. Das Schubspannungs-Differenzsignal wird im Bereich des Vorzeichenwechsels der Schubspannung (also wenn der Lasteintrag in die Schiene durch das Rad genau zwischen den beiden Faser-Bragg-Gittern stattfindet) betragsmäßig sehr groß, was eine einfache Detektion eines Rads ermöglicht. Ein Schubspannungssignal, also ein Signal mit Hilfe dessen auf die auftretende Schubspannung an einer bestimmten Sensorstelle geschlossen werden kann, kann bspw. erhalten werden durch Detektion des durch das an der Sensorstelle montierten Faser-Bragg-Gitter reflektierten Lichts, wobei das Faser-Bragg-Gitter schräg gegenüber der neutralen Faser angeordnet ist, insbesondere in einem Winkel von ±45° oder ±90°. Die Erzeugung des Schubspannungs-Differenzsignals erfolgt durch Detektion und Differenzbildung des zeitlichen Verlaufs der Wellenlängenänderung der Bragg-Wellenlängen der Faser-Bragg-Gitter, wobei die Wellenlängenänderung durch Detektion der Intensitätsänderung des reflektierten Lichts der Faser-Bragg-Gitter ermittelt wird. Dies kann auf unterschiedliche Weise erfolgen und wird im Folgenden anhand verschiedener Varianten detailliert beschrieben. Bei allen Varianten wird der zeitliche Intensitätsverlaufs der in der/den Sensorfaser(n) reflektierten Lichtleistung detektiert, vorzugsweise mittels einer oder mehreren fasergekoppelten Photodioden.

### Bevorzugte Varianten

Eine besonders vorteilhafte Variante des erfindungsgemäßen Achszählverfahrens (**OEC-Konzept**) zeichnet sich dadurch aus, dass Sensorfasern mit jeweils zwei in Reihe angeordneten Faser-Bragg-Gitter mit unterschiedlichen Bragg-Wellenlängen (an zwei in Schienenrichtung voneinander beabstandeten Sensorstellen verwendet werden, und dass das Erzeugen des Schubspannungs-Differenzsignals optisch mittels eines optoelektronischen Bausteins innerhalb einer Signalverarbeitungseinheit dadurch erfolgt, dass der zeitliche Intensitätsverlauf der in der Sensorfaser reflektierten Lichtleistung mittels des optoelektronischen Bausteins detektiert und an zwei Filterkanten eines Wellenlängenfilters des optoelektronischen Bausteins gefiltert wird, wobei sich die Filterkanten jeweils im Bereich einer der Bragg-Wellenlängen der Faser-Bragg-Gitter befinden und Steigungen mit unterschiedlichem Vorzeichen aufweisen, und dass der gefilterte Intensitätsverlauf als Differenzsignal detektiert wird. Durch die Verarbeitung des Differenzsignals innerhalb der Signalverarbeitungseinheit werden (digitale) Radsignale erzeugt.

Beim OEC-Konzept werden optoelektronische Bausteine (OE-Chips) zur Messung der reflektierten Lichtleistung und zur Signalwandlung genutzt. Aufgrund der Belastung der Sensorstellen und den damit verbundenen Schubspannungen verschieben sich die Bragg-Wellenlängen der Faser-Bragg-Gitter. Die von den verschiedenen Faser-Bragg-Gittern stammenden Anteile der reflektierten Lichtleistung unterliegen der Filterung an unterschiedlichen Filterkanten. Die Änderungen der Bragg-Wellenlängen sind ein Maß für die auftretenden Schubspannungen. Die Bildung der optischen Differenz der Schubspannungssignale erfolgt dadurch, dass sich die von den verschiedenen Faser-Bragg-Gitter stammenden Anteile der reflektierten Lichtleistung (Summenspektrum des von beiden Faser-Bragg-Gitter reflektierten Lichts) der beiden Faser-Bragg-Gitter entlang jeweils einer Filterkante des optoelektronischen Bausteins bewegen, wobei die Filterkanten Steigungen mit unterschiedlichen Vorzeichen aufweisen. Die Anteile der reflektierten Lichtleistung der beiden Sensorelemente werden somit unterschiedlich stark gefiltert. Die Bragg-Wellenlängen und die Filterkanten sind vorzugsweise so aufeinander abgestimmt, dass sich bei einer angenommenen Belastung die Reflexionspeaks der Faser-Bragg-Gitter nicht in die jeweils andere Filterkante verschieben. Auf diese Weise entsteht ein Minimum bzw. ein Maximum (Das Vorzeichen hängt von der Winkelorientierung (±45°) der Faser-Bragg-Gitter zur neutralen Faser ab je nachdem wie die Faser-Bragg-Gitter zur neutralen Faser ausgerichtet sind) im Verlauf der reflektierten Lichtleistung, wenn die Differenz der Schubspannungen an den beiden Sensorstellen sehr groß wird. Dies kann mit einem Komparator digitalisiert werden.

Damit die Leistung in Summe bei kleinen Änderungen konstant bleibt, ist es vorteilhaft, wenn die Halbwertsbreiten (FWHM) der Spektren und ihre Reflektivitäten (R) der Faser-Bragg-Gitter ähnlich sind. Bei einer besonders vorteilhaften Variante unterscheiden sich daher die Halbwertsbreiten der Reflexionspeaks der beiden Faser-Bragg-Gitter um weniger als 0.5 nm und ihre Reflektivitäten um weniger als 20 %. Außerdem sollten die Abweichungen zum jeweiligen Arbeitspunkt (vorzugsweise Mittenlage) in der Filterkante klein sein, typischerweise < 1 nm. Andernfalls können vor und nach dem Leistungsminimum Unter-und Überschwinger auftreten, die in der Konsequenz die minimal detekierbaren Lasten beschränken. Für die Detektion von Zugachsen auf einer Schiene können bspw. Faser-Bragg-Gitter mit folgenden Werten verwendet werden: λ1 = 1541,9 nm, R1 = 45%, FWHM1 = 550 pm; λ2 = 1550,1 nm, R = 55%, FWHM = 650 pm.

Vorzugsweise wird ein Referenzsignal aus dem zeitlichen Intensitätsverlaufs der in der Sensorfaser reflektierten Lichtleistung mittels des optoelektronischen Bausteins ungefiltert detektiert, und das Differenzsignal wird mit dem Referenzsignal verglichen.

Bei einer alternativen Variante (**RR-Konzept**) des erfindungsgemäßen Verfahrens werden Sensorfasern mit zwei in Reihe angeordneten Faser-Bragg-Gitter mit unterschiedlichen Bragg-Wellenlängen an zwei in Schienenrichtung voneinander beabstandeten Sensorstellen verwendet, wobei das Erzeugen des Schubspannungs-Differenzsignals optisch durch eine spektrale Überlappung der Reflexionspeaks der beiden Faser-Bragg-Gitter während des Übergangs von einem unbelasteten Zustand zu einem belasteten Zustand erfolgt. Durch die Verarbeitung des Differenzsignals innerhalb der Signalverarbeitungseinheit werden (digitale) Radsignale erzeugt.

Die Verschiebung der Bragg-Wellenlängen ist ein Maß für die an der jeweiligen Sensorstelle auftretenden Schubspannung. Der Grad der Überlappung der Reflexionspeaks ist ein Maß für die Schubspannungsdifferenz.

Vorzugsweise erfolgt die Überlappung der Reflexionspeaks im belasteten Zustand. Bei dieser Variante werden die Bragg-Wellenlängen der beiden Faser-Bragg-Gitter so gewählt, dass sich die Reflexionspeaks der beiden Faser-Bragg-Gitter einer Schienenkontakthälfte im belasteten Zustand überlappen. Je stärker die Reflexionspeaks überlappen desto weniger Licht reflektiert. Bei Belastung der Schiene wird demnach ein Intensitätsminimum detektiert. Das Erzeugen eines Schubspannungs-Differenzsignals erfolgt bei dieser Variante also durch die Überlappung der Reflexionspeaks bei Belastung der Schienen. Dazu wird der Abstand der Bragg-Wellenlängen der Faser-Bragg-Gitter erfindungsgemäß so gewählt, dass bei einer Belastung mit einer erwarteten Masse eine merkliche Überlappung, vorzugsweise eine vollständige Überlappung, der Reflexionspeaks erfolgt. Es ist jedoch auch möglich den Abstand und die Halbwertsbreiten der Reflexionspeaks so zu wählen, dass sich die Reflexionspeaks im unbelasteten Zustand überlappen und sich bei Belastung auseinander schieben. In diesem Fall würde man bei Belastung ein Intensitätsmaximum messen.

Dieses RR-Konzept zeichnet sich durch eine geringe Komplexität bei der Signalverarbeitung auf der Anpassungsplatine aus.

Bei einer dritten Variante **(OE2-Konzept)** des erfindungsgemäßen Achszählverfahrens werden zwei Sensorfasern mit je einem Faser-Bragg-Gitter verwendet, wobei die Faser-Bragg-Gitter verschiedener Sensorfasern an in Schienenrichtung voneinander beabstandeten Sensorstellen angeordnet sind. Erfindungsgemäß wird für jede Sensorfaser ein gefiltertes Signal des zeitlichen Intensitätsverlaufs der in der Sensorfaser von dem Faser-Bragg-Gitter reflektierten Lichtleistung durch Filterung an jeweils einer Filterkante eines Wellenlängenfilters eines optoelektronischen Bausteins innerhalb einer Signalverarbeitungseinheit erzeugt, wobei die Erzeugung des Schubspannungs-Differenzsignals der beiden Faser-Bragg-Gitter elektronisch mittels eines Mikrokontrollers erfolgt. Als Referenzsignal dient das ungefilterte von dem Faser-Bragg-Gitter reflektierte Licht bzw. das durch Signalverarbeitung aus diesem Licht gewonnene el. Signal (nicht optisch gefiltertes Lichtleistungssignal)

Bei dieser Variante wird also das Schubspannungs-Differenzsignal nicht innerhalb einer Schienenkontakthälfte ermittelt, sondern aus den von den optoelektronischen Bausteinen der beiden Schienenkontakthälften verarbeiteten Signalen im Mikrokontroller. Es wird also eine Differenz von el. Signalen durchgeführt.

Besonders vorteilhaft ist es, wenn ein Referenzsignal aus dem zeitlichen Intensitätsverlaufs der in der Sensorfaser reflektierten Lichtleistung mittels des optoelektronischen Bausteins ungefiltert detektiert, und das Schub-spannungssignal aus dem Verhältnis von gefiltertem Signal und Referenzsignal ermittelt wird. Damit wird eine Unabhängigkeit von der eingestrahlten Lichtleistung der erreicht.

Zur Feststellung eines Fehlers kann überprüft werden, ob das Referenzsignal einen dritten Grenzwert überschreitet (dritter Grenzwert = oberer Grenzwert) bzw. unterschreitet (dritter Grenzwert = unterer Grenzwert). Bevorzugt ist letztere Variante, also dass ein Fehler festgestellt, wenn das Referenzsignal einen vorgegebenen dritten Grenzwert unterschreitet. Das Achszählverfahren wird also vorzugsweise in einem "Ruhelichtprinzip" (analog zum Ruhestromprinzip) durchgeführt. Das bedeutet, dass im Standby-Betrieb kontinuierlich ein von den Faser-Bragg-Gittern reflektiertes Signal detektiert wird. Fällt die Lichtquelle aus oder wird ein Kabel (z.B. zwischen Schienenkontakt und Signalverarbeitungsplatine gekappt), so fällt das Referenzsignal unter den festgelegten Grenzwert, wodurch eine einfache Fehlererkennung der optischen Komponenten realisiert werden kann. So wird die Erkennung möglicher Defekte (Ausfall der Lichtquelle, Kappung eines Kabels, Verschmutzungen an Steckstellen) im optischen Teil der Signalverarbeitung, der Glasfaserzuleitung und am Sensor selber ohne zusätzliche Diagnoseeinrichtung ermöglicht (Selbsttestfunktionalität der Faser-Bragg-Gitter). Ein Test kann beispielsweise durchgeführt werden, indem die Lichtquelle kurzzeitig ausgeschaltet wird. Eine andere Möglichkeit besteht darin, das Licht der Lichtquelle in ihrer Intensität zu modulieren. Weist das detektierte Licht die gleiche Modulation auf, wird der Test als erfolgreich gewertet. Ein Abschalten der Lichtquelle ist hierbei nicht erforderlich.

Die Erfindung betrifft auch Achszählvorrichtungen zur Durchführung der verschiedenen Varianten des erfindungsgemäßen Verfahrens.

Eine erste erfindungsgemäße Achszählvorrichtung **(OEC-Achszähler)** umfasst eine Lichtquelle, mindestens einen Zählpunkt, wobei jeder Zählpunkt zwei Schienenkontakthälften zur Montage an einer Schiene umfasst. Erfindungsgemäß umfasst jede Schienenkontakthälfte eine Sensorfaser mit einem ersten Faser-Bragg-Gitter mit einer ersten Bragg-Wellenlänge und einem zweiten Faser-Bragg-Gitter mit einer zweiten Bragg-Wellenlänge, wobei die Faser-Bragg-Gitter zur Montage schräg gegenüber der neutralen Faser an der Schiene ausgebildet sind. Darüber hinaus umfasst die Schienenkontakthälfte einen optoelektronischen Baustein zur Durchführung einer optischen Subtraktion der von den zwei Faser-Bragg-Gittern einer Sensorfaser reflektierten Lichtleistung, wobei der optoelektronische Baustein einen wellenlängenabhängigen Filter mit zwei Filterkanten umfasst, wobei sich die Filterkanten jeweils im Bereich einer der Bragg-Wellenlängen der Faser-Bragg-Gitters befinden und Steigungen mit unterschiedlichem Vorzeichen aufweisen.

Vorzugsweise sind die Steigungen der Filterkanten betragsmäßig gleich. Dabei ist es ausreichend, wenn die Steigungen in dem Bereich, innerhalb dem sich die Bragg-Wellenlängen verschieben, betragsmäßig gleich sind.

Um Material zu sparen, können die Faser-Bragg-Gitter beider Schienenkontakthälften eines Zählpunktes innerhalb einer gemeinsamen Sensorfaser angeordnet sein. Mittels einer Frequenzweiche können die Signale den einzelnen Schienenkontakthälften zugeordnet werden. Bei einer besonders materialsparenden Weiterbildung dieser Ausführungsform weisen die Schienenkontakthälften eines Zählpunktes ein gemeinsames Faser-Bragg-Gitter auf.

Eine zweite erfindungsgemäße Achszählvorrichtung **(RR-Achszähler)** umfasst eine Lichtquelle und mindestens einen Zählpunkt, wobei jeder Zählpunkt zwei Schienenkontakthälften zur Montage an einer Schiene umfasst, wobei jede Schienenkontakthälfte eine Sensorfaser mit zwei in Reihe angeordneten Faser-Bragg-Gitter an zwei voneinander beabstandeten Sensorstellen umfasst, wobei die Faser-Bragg-Gitter zur Montage schräg gegenüber der neutralen Faser an der Schiene ausgebildet sind und wobei die Bragg-Wellenlängen der beiden Faser-Bragg-Gitter und der Abstand der beiden Sensorstellen zueinander so gewählt sind, dass bei einer vorgegebenen Belastung der Schiene zwischen den beiden Sensorstellen sich die Reflexionspektren der beiden Faser-Bragg-Gitter überlappen. Darüber hinaus ist eine Signalverarbeitungseinheit zur Detektion und Weiterverarbeitung des von den Faser-Bragg-Gittern reflektierten Lichts vorgesehen. Vorzugsweise sind die Bragg-Wellenlängen der beiden Faser-Bragg-Gitter und der Abstand der beiden Sensorstellen (also der Abstand von gleichen Teilen der beiden Faser-Bragg-Gitter) zueinander so gewählt, dass sich bei einer vorgegebenen Belastung der Sensorstelle die beiden Reflexionspektren der Faser-Bragg-Gitter vollständig überlappen.

Um einen guten Sättigungseffekt zu erzielen, sollte eines der Faser-Bragg-Gitter einen Reflexionspeak mit einer großen Halbwertsbreite besitzen, die Halbwertsbreite des Reflexionspeaks des anderen Faser-Bragg-Gitters dagegen sollte klein sein. Die Halbwertsbreiten der Reflexionspeaks der beiden Faser-Bragg-Gitter unterscheiden sich daher vorzugsweise um 1 bis 2 Größenordnungen. Dadurch wird ein vollständiges Überstreichen der Reflexionspeaks bei schweren Zügen verhindert, was sonst in zwei Peaks pro Achse im Intensitätsverlauf der reflektierten Lichtleistung resultieren würde.

Besonders vorteilhaft ist es, wenn die Bragg-Wellenlängen der beiden Faser-Bragg-Gitter sich nicht mehr als 5 nm unterscheiden und die Halbwertsbreite eines Faser-Bragg-Gitters mindestens 0,05 nm und die Halbwertsbreite des anderen FBGs höchstens 5 nm beträgt. Vorzugsweise überlappen sich die Reflexionspeaks der beiden FBGs im unbelasteten Zustand leicht, wobei die Bragg-Wellenlänge des ersten Faser-Bragg-Gitters (das der Signalverarbeitungseinheit zugewandte Faser-Bragg-Gitter) größer ist als die Bragg-Wellenlänge des zweiten Faser-Bragg-Gitters (das der Signalverarbeitungseinheit abgewandte Faser-Bragg-Gitter).

Eine dritte erfindungsgemäße Achszählvorrichtung **(OE2-Achszähler)** umfasst eine Lichtquelle und mindestens einem Zählpunkt mit jeweils zwei Schienenkontakthälften zur Montage an einer Schiene. Erfindungsgemäß umfasst jede Schienenkontakthälfte eine Sensorfaser mit einem Faser-Bragg-Gitter mit einer Bragg-Wellenlänge, wobei das Faser-Bragg-Gitter zur Montage schräg gegenüber der neutralen Faser an der Schiene ausgebildet ist. Weiterhin umfasst jede Schienenkontakthälfte eine Signalverarbeitungseinheit zur Erzeugung von Schubspannungssignalen, wobei die Auswerteeinheit einen optoelektronischen Baustein mit einer Filterkante (optischer Filter) umfasst. Zur Erzeugung eines Differenzsignals der von den Signalverarbeitungseinheiten ausgegeben Schubspannungssignalen weist die erfindungsgemäße Achszählvorrichtung einen Mikrokontroller auf.

Bei dem Mikrokontroller handelt es sich um ein programmierbares Bauteil, welches aus den von den optoelektronischen Bausteinen der beiden Schienenkontakthälften verarbeiteten Signalen die Differenz der Schubspannungssignale ermittelt.

Für alle erfindungsgemäßen Achszähler wird als Lichtquelle vorzugsweise eine breitbandige Lichtquelle, z.B. eine Superlumineszenzdiode, verwendet.

Bei allen vorgestellten erfindungsgemäßen Achszählvorrichtungen ist es besonders vorteilhaft, wenn die Faser-Bragg-Gitter (also die Ausdehnung der Faser-Bragg-Gitter in Lichtausbreitungsrichtung) parallel zueinander in einem Winkel ±30° bis ±60°, insbesondere ±45°, oder zur neutralen Faser an der Schiene angebracht sind. Mit Hilfe der schrägen Anordnung der Faser-Bragg-Gitter werden durch Detektion des von den Faser-Bragg-Gittern reflektierten Lichts beim Überrollen der Schiene durch ein Rad Schubspannungen in der Schiene gemessen. Somit ist das Verfahren unabhängig von der Größe des Rads und dem Radkranz.

Vorzugsweise kreuzen die Faser-Bragg-Gitter die neutrale Faser der Schiene.

Bei einer vorteilhaften Ausführungsform der erfindungsgemäßen Achszählvorrichtung sind die Faser-Bragg-Gitter mit einer Wandlerstruktur zur Kompensation einer Temperaturdehnung der Schiene ausgestattet. Mittels der Wandlerstruktur wird der absolute Betrag der Wellenlängenänderung durch Temperaturveränderungen an der Schiene begrenzt. Gleichzeitig hat die Wandlerstruktur die Aufgabe, die relativ niedrigen Dehnungspegel der Schubspannung zu verstärken, um auch niedrige Achslasten detektieren zu können

Besonders vorteilhaft ist es, wenn die Faser-Bragg-Gitter unter Vorspannung an der Schiene befestigt sind. Auf diese Weise kann auf einfache Weise festgestellt werden, wenn sich ein Faser-Bragg-Gitter von der Schiene gelöst hat, da unter Wegfall der Vorspannung sich die Bragg-Wellenlänge des Faser-Bragg-Gitters ändert. Die Montage der Faser-Bragg-Gitter unter Vorspannung ermöglicht es, zu erkennen, wenn sich ein Faser-Bragg-Gitter von der Schiene gelöst hat, da beim Lösen des Faser-Bragg-Gitters die Vorspannung wegfällt und sich entsprechend die Bragg-Wellenlänge des Faser-Bragg-Gitters ändert. Als Folge dessen wird ein permanentes Radsignal ausgegeben. Die Vorspannung kann vor Anbringen der Faser-Bragg-Gitter an die Schiene mechanisch erfolgen oder über einen Träger thermisch während der Träger unter Vorspannung an der Schiene angebracht wird.

Besonders vorteilhaft ist es, wenn eine Trimmvorrichtung zum Einstellen der Vorspannung vorgesehen ist, mit der die FBGs an die Schiene montiert werden.

Vorzugsweise umfasst die Signalverarbeitungseinheit einen faseroptischen Strahlteiler. Der Strahlteiler dient dazu, neben dem kantengefilterten Signal ein Referenzsignal mittels einer zweiten Photodiode abzugreifen.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt den schematischen Aufbau einer Schienenkontakthälfte einer erfindungsgemäßen Achszählvorrichtung nach dem EOC-Konzept.
- Fig. 2: zeigt ein Blockschaltbild zur Verarbeitung eines von der Schienenkontakthälfte aus Fig. 1 erhaltenden optischen Signals (EOC-Konzept).
- Fig. 3: zeigt den Verlauf der Reflexionspeaks relativ zu den Filterkanten (EOC-Konzept).
- Fig. 4: zeigt den zeitlichen Verlauf des von den Photodioden detektierten Photostroms des Differenzsignals gemäß OEC-Konzept, sowie die den einzelnen Faser-Bragg-Gittern zugeordneten Anteile des detektierten Photostroms.
- Fig. 5: zeigt den schematischen Aufbau einer Schienenkontakthälfte einer erfindungsgemäßen Achszählvorrichtung nach dem RR-Konzept.
- Fig. 6: zeigt ein Blockschaltbild zur Verarbeitung eines von der Schienenkontakthälfte aus Fig. 5 erhaltenden optischen Signals (RR-Konzept).
- Fig. 7a, b: zeigt die Anordnung der Reflexionspeaks in einem unbelasteten und einem belasteten Zustand.
- Fig. 8: zeigt den zeitlichen Verlauf des Differenzsignals gemäß RR-Konzept.
- Fig. 9: zeigt den schematischen Aufbau zweier Schienenkontakthälften einer erfindungsgemäßen Achszählvorrichtung nach dem EO2-Konzept.
- Fig. 10: zeigt ein Blockschaltbild zur Verarbeitung der von zwei Schienenkontakthälften gemäß Fig. 9 erhaltende Signale (OE2-Konzept).
- Fig. 11: zeigt die Anordnung eines Reflexionspeaks relativ zur Filterkante in einem unbelasteten Zustand der Schiene.
- Fig. 12a: zeigt den zeitlichen Verlauf der Schubspannungssignale der beiden Schienenkontakthälften gemäß OE2-Konzept.
- Fig. 12b: zeigt den zeitlichen Verlauf des Differenzsignals gemäß OE2-Konzept.
- Fig. 13a: zeigt an einer Schiene angebrachte Faser-Bragg-Gitter zweier Schienenkontakthälften gemäß OEC bzw. RR-Konzept mit getrennten Sensorfasern.
- Fig. 13b: zeigt an einer Schiene angebrachte Faser-Bragg-Gitter zweier Schienenkontakthälften gemäß OEC bzw. RR-Konzept mit einer gemeinsamen Sensorfaser.
- Fig. 13c: zeigt an einer Schiene angebrachte Faser-Bragg-Gitter zweier Schienenkontakthälften gemäß OE2-Konzept.
- Fig. 14: zeigt einen Querschnitt einer Schiene mit an der Schiene angebrachtem Faser-Bragg-Gitter gemäß Fig. 13a-c.
- Fig. 15: zeigt den allgemeinen Aufbau einer erfindungsgemäßen Achszählvorrichtung.

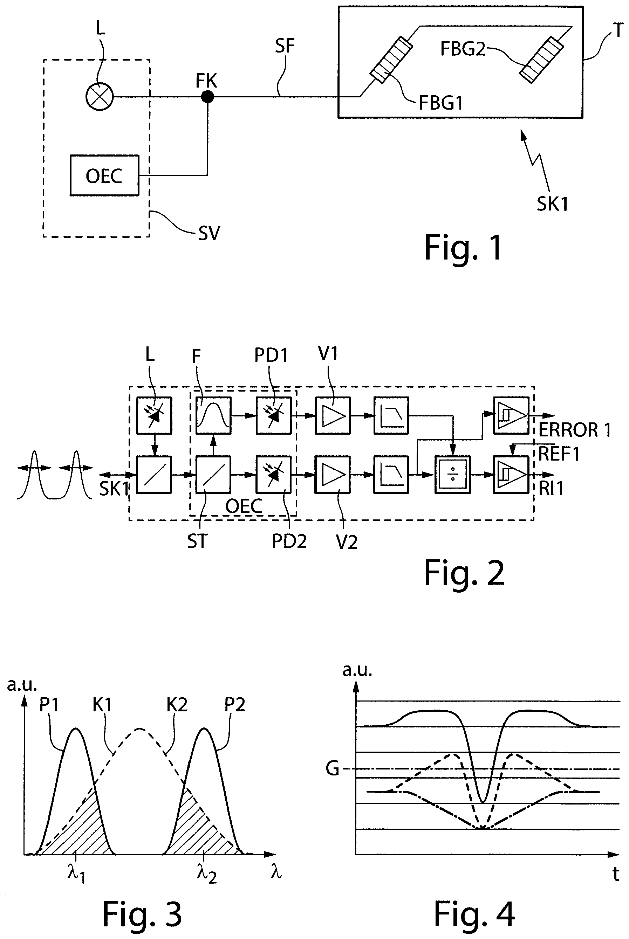

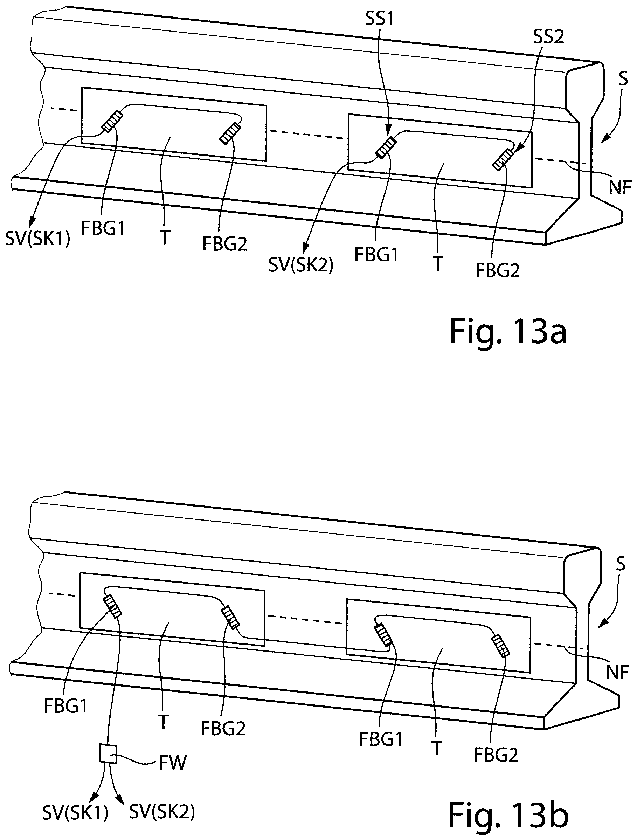

**Fig. 1** zeigt den Aufbau einer Schienenkontakthälfte **SK1** einer erfindungsgemäßen Achszählvorrichtung nach dem **EOC-Konzept.** Die Schienenkontakthälfte SK1 umfasst eine Sensorfaser **SF** mit zwei Faser-Bragg-Gitter **FBG1, FBG2,** die voneinander beabstandet sind und vorzugsweise so auf einem Träger **T** vormontiert sind, dass sie einfach in der gewünschten Orientierung an einer Schiene S montiert werden können (s. Fig. 13a, b). Die Faser-Bragg-Gitter FBG1, FBG2 weisen unterschiedliche Bragg-Wellenlängen **λ1, λ2** auf und reflektierten entsprechend Licht der jeweiligen Bragg-Wellenlänge λ1, λ2. Über eine Lichtquelle **L** wird Licht in die Sensorfaser SF eingekoppelt. Das von den Faser-Bragg-Gittern FBG1, FBG2 reflektierte Licht wird mittels eines Faserkopplers **FK** zu einem optoelektronischen Baustein **OEC** geleitet, in dem das reflektierte Licht verarbeitet wird. Der optoelektronische Baustein OEC und die Lichtquelle L sind im vorliegenden Fall Teil einer Signalverarbeitungseinheit **SV.**

In **Fig. 2** ist dargestellt, wie das reflektierte Licht in der Signalverarbeitungseinheit **SV** weiterverarbeitet wird. Das reflektierte Licht wird von der Sensorfaser SF in den optoelektronischen Baustein OEC geleitet, in dem das Licht mittels eines Strahlteilers **ST** geteilt wird. In einem ersten Kanal wird das reflektierte Licht mittels eines Wellenlängenfilters **F** gefiltert und mittels einer ersten Photodiode **PD1** als elektrisches Differenzsignal **S_{D}** detektiert. In einem zweiten Kanal wird das reflektierte Licht direkt auf eine zweite Photodiode **PD2** geleitet und dort als Referenzsignal **S_{R}** detektiert, wobei das Referenzsignal S_{R} proportional zur gesamten reflektierten Lichtleistung ist. Gemäß der Erfindung weist der Wellenlängenfilter F zwei Filterkanten **K1, K2** auf, wobei beide Filterkanten K1, K2 Steigungen mit unterschiedlichen Vorzeichen aufweisen. Aufgrund der unterschiedlichen Vorzeichen werden Verschiebungen der Bragg-Wellenlängen λ1, λ2 der beiden Faser-Bragg-Gitters FBG1, FBG2 z.B. zu größeren Wellenlängen hin unterschiedlich bewertet, nämlich beim ersten Faser-Bragg-Gitter FBG1 durch eine Zunahme der detektierten Lichtleistung und beim andern Faser-Bragg-Gitter FBG2 durch eine Abnahme der detektierten Lichtleistung.

Transimpedanzverstärker **V1, V2** wandeln Differenzsignal S_{D} und Referenzsignal S_{R} in Spannungssignale um. Diese können nun weiter verrechnet werden (z. B. durch Tiefpassfilterung). Zur Ermittlung der eigentlichen Messgröße wird das Verhältnis zwischen dem Differenzsignal S_{D} und dem Referenzsignal S_{R} gebildet. Dadurch wird Streckenneutralität erreicht und es werden von Dämpfungseffekten unabhängige Messungen ermöglicht. Das so erzeugte Signal ist proportional zur Achslast, was gesondert ausgewertet werden kann. Das analoge Signal kann dann mit Hilfe eines Komparators in ein digitales Radsignal (Radimpuls **RI1)** umgewandelt werden.

**Fig. 3** zeigt einen möglichen Verlauf der Filterkanten K1, K2 relativ zu den Reflexionspeaks **P1, P2** der Faser-Bragg-Gitter FBG1, FBG2. Die beiden Filterkanten K1, K2 weisen betragsmäßig die gleiche Steigung auf, sind jedoch im gezeigten Diagramm in unterschiedliche Richtungen geneigt (unterschiedliche Vorzeichen). Die Reflexionspeaks P1, P2 der Faser-Bragg-Gitter FBG1, FBG2 sind symmetrisch zu den Filterkanten K1, K2 gewählt. Die Filterkanten K1, K2 verlaufen durch die Reflexionspeaks P1, P2, so dass sowohl Verschiebungen der Reflexionspeaks zu größeren als auch zu kleineren Wellenlängen eine Änderung der Lichtintensität zur Folge haben, wobei eine Verschiebung des ersten Reflexionspeaks P1 zu größeren Wellenlängen eine Intensitätszunahme bewirkt, wohingegen eine Verschiebung des zweiten Reflexionspeaks P2 zu größeren Wellenlängen eine Intensitätsabnahme bewirkt.

**Fig. 4** zeigt schematisch den Verlauf des Differenzsignals S_{D} (durchgezogenen Kurve) sowie die Anteile des durch die jeweiligen Faser-Bragg-Gitter FBG1, FBG2 reflektierten Lichts an dem Differenzsignal (FBG1:gestrichelte Kurve), FBG2: gepunktete Kurve). Im gezeigten Beispiel wird das erste Faser-Bragg-Gitter aufgrund einer sich nähernden Belastung gestaucht und die Bragg-Wellenlänge λ1 des ersten Faser-Bragg-Gitters FBG1 wird zu größeren Wellenlängen verschoben, also entlang der steigenden Filterkante K1. Hierdurch wird ein Anstieg der Intensität der Lichtleistung bewirkt. Bewegt sich die Last über das erste Faser-Bragg-Gitter FBG1 hinweg in Richtung zweites Faser-Bragg-Gitter FBG2 wird das erste Faser-Bragg-Gitter FBG1 gedehnt, die Bragg-Wellenlänge λ1 des ersten Faser-Bragg-Gitters FBG1 also zu kleineren Wellenlängen (entlang der fallenden Filterkante K1) verschoben, während das zweite Faser-Bragg-Gitter FBG2 gestaucht, die Bragg-Wellenlänge λ2 des zweiten Faser-Bragg-Gitters FBG2 also zu größeren Wellenlängen (entlang der fallenden Filterkante K2) verschoben wird. Es ergibt sich der in Fig. 4 gezeigte Verlauf des Differenzsignals S_{D}. Ein Radimpuls RI1 wird festgestellt, wenn das Differenzsignal S_{D} einen vorher festgelegten Grenzwert **G** unterschreitet.

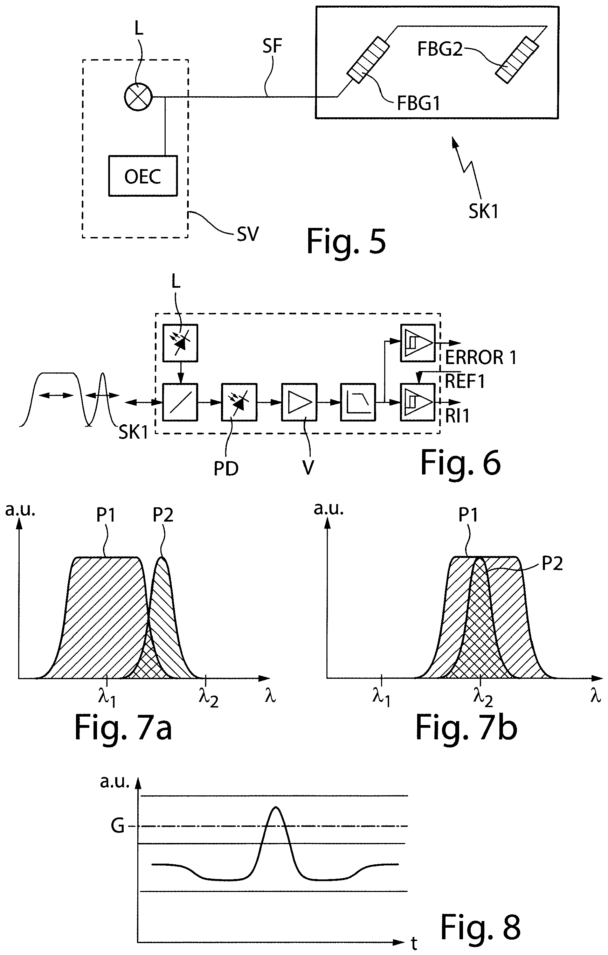

Fig. 5 zeigt den Aufbau einer Schienenkontakthälfte SK1 einer erfindungsgemäßen Achszählvorrichtung nach dem RR-Konzept. Die Schienenkontakthälfte SK1 umfasst eine Sensorfaser SF mit zwei Faser-Bragg-Gitter FBG1, FBG2, die voneinander beabstandet sind und vorzugsweise so auf einem Träger T vormontiert sind, dass sie einfach in der gewünschten Orientierung an einer Schiene S montiert werden können (s. Fig. 13a,b). Die Faser-Bragg-Gitter FBG1, FBG2 weisen unterschiedliche Bragg-Wellenlängen λ1, λ2 auf und reflektieren entsprechend Licht der jeweiligen Bragg-Wellenlänge λ1, λ2. Über eine Lichtquelle L wird Licht in die Sensorfaser SF eingekoppelt. Das von den Faser-Bragg-Gittern FBG1, FBG2 reflektierte Licht wird in eine Signalverarbeitungseinheit SV geleitet, in der das reflektierte Licht verarbeitet wird. Die Lichtquelle L ist im vorliegenden Fall Teil der Signalverarbeitungseinheit SV.

In **Fig. 6** ist dargestellt, wie das reflektierte Licht in der Signalverarbeitungseinheit SV weiterverarbeitet wird. Das reflektierte Licht wird mittels einer Photodiode **PD** als elektrisches Differenzsignal S_{D} detektiert. Verschiebungen der Bragg-Wellenlängen λ1, λ2 der beiden Faser-Bragg-Gitter FBG1, FBG2. Ein Transimpedanzverstärker V wandelt das Differenzsignal S_{D} in ein Spannungssignal um. Dieses kann nun weiter verrechnet werden (z. B. durch Tiefpassfilterung). Das analoge Signal kann dann mit Hilfe eines Komparators in ein digitales Radsignal (Radimpuls RI1) umgewandelt werden.

**Fig. 7a, b** zeigen ein besonders vorteilhaftes Beispiel für die Reflexionspeaks P1, P2 der beiden Faser-Bragg-Gitter FBG1, FBG2 in einem unbelasteten Zustand (Fig. 7a) und einem belasteten Zustand (Fig. 7b). Die Reflexionspeaks P1, P2 weisen unterschiedliche Halbwertsbreiten **FWHM** auf. Im unbelasteten Zustand überlappen die Reflexionspeaks P1, P2 im gezeigten Beispiel leicht, so dass sowohl Verschiebungen der Reflexionspeaks zu größeren als auch zu kleineren Wellenlängen eine Änderung der Lichtintensität zur Folge haben, wobei eine Verschiebung der Reflexionspeaks P1, P2 voneinander weg eine Intensitätszunahme bewirkt, wohingegen eine Verschiebung der Reflexionspeaks P1, P2 aufeinander zu eine Intensitätsabnahme bewirkt, da eine Überlappung der Reflexionspeaks P1, P2 die Bandbreite des reflektierten Lichts verringert. Durch die Überlappung der Reflexionspeaks P1, P2 wird ein Differenzsignal S_{D} erzeugt, da ein Teil des vom zweiten Faser-Bragg-Gitter FBG2 zu reflektierenden Lichts bereits vom ersten Faser-Bragg-Gitter FBG1 reflektiert wird und daher nicht zum zweiten Faser-Bragg-Gitter FBG2 gelangt und folglich auch nicht vom zweiten Faser-Bragg-Gitter FBG2 reflektiert werden kann.

**Fig. 8** zeigt schematisch den Verlauf des Differenzsignals S_{D}. Im gezeigten Beispiel wird das erste Faser-Bragg-Gitter aufgrund einer sich nähernden Belastung gestaucht und der erste Reflexionspeak P1 des ersten Faser-Bragg-Gitters FBG1 wird zu größeren Wellenlängen hin verschoben, also in Richtung des zweiten Reflexionspeaks P2. Hierdurch nimmt die Überlappung der Reflexionspeaks P1, P2 zu, was zu einer Abnahme der Intensität der Lichtleistung führt. Bewegt sich die Last über das erste Faser-Bragg-Gitter FBG1 hinweg in Richtung zweites Faser-Bragg-Gitter FBG2, wird das erste Faser-Bragg-Gitter FBG1 gedehnt, die Bragg-Wellenlänge λ1 des ersten Faser-Bragg-Gitters FBG1 und damit der erste Reflexionspeak P1 also zu kleineren Wellenlängen verschoben, während das zweite Faser-Bragg-Gitter FBG2 gestaucht, der zweite Reflexionspeak P2 des zweiten Faser-Bragg-Gitters FBG2 also zu größeren Wellenlängen verschoben wird. Die Reflexionspeaks P1, P2 entfernen sich also voneinander. Hierdurch nimmt die Überlappung der Reflexionspeaks P1, P2 ab, was zu einer sprunghaften Zunahme der Intensität der Lichtleistung führt. Es ergibt sich der in Fig. 8 gezeigte Verlauf des Differenzsignals S_{D}. Ein Radimpuls RI1 wird festgestellt, wenn das Differenzsignal S_{D} einen vorher festgelegten Grenzwert **G** überschreitet.

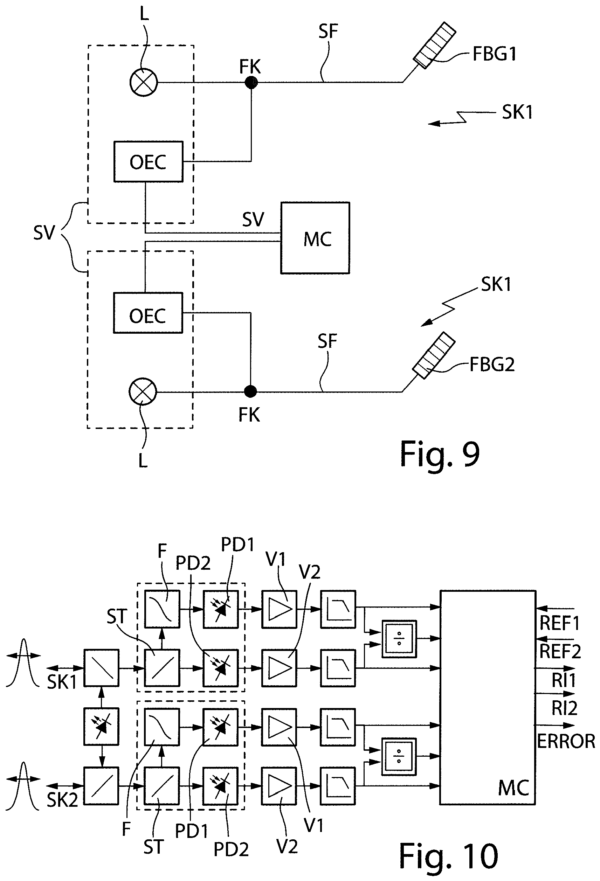

**Fig. 9** zeigt den Aufbau zweier Schienenkontakthälften **SK1, SK2** einer erfindungsgemäßen Achszählvorrichtung nach dem **EO2-Konzept.** Die Schienenkontakthälften SK1, SK2 umfassten jeweils eine Sensorfaser SF mit einem Faser-Bragg-Gitter FBG1, FBG2. Die Faser-Bragg-Gitter FBG1, FBG2 der beiden Schienenkontakthälften SK1, SK2 weisen Bragg-Wellenlängen λ1, λ2 auf und reflektierten entsprechend Licht der jeweiligen Bragg-Wellenlänge λ1, λ2. Bei dieser Variante können die Bragg-Wellenlänge λ1, λ2 gleich sein. Über jeweils eine Lichtquelle L wird Licht in die Sensorfasern SF eingekoppelt. Im Prinzip kann jedoch auch nur eine einzige Lichtquelle vorgesehen sein, die Licht in beide Sensorfasern SF einspeist. Das von den Faser-Bragg-Gittern FBG1, FBG2 reflektierte Licht wird in jeder Schienenkontakthälfte SK1, SK2 mittels eines Faserkopplers FK zu einem optoelektronischen Baustein OEC geleitet, in dem das reflektierte Licht verarbeitet wird. Die optoelektronischen Bausteine OEC und die Lichtquelle L sind im vorliegenden Fall Teile von Signalverarbeitungseinheiten SV. Die optoelektronischen Bausteine OEC setzen die detektierten Signale in elektrische Ströme um, verarbeiten diese und leiten sie an einen Mikrokontroller **MC** weiter, in dem ein Differenzsignal erzeugt wird. Im Mikrokontroller MC wird aus dem Differenzsignal mittels Schwellwertbildung ein digitales Signal erzeugt, dass als Radimpuls ausgegeben wird.

In **Fig. 10** ist dargestellt, wie das reflektierte Licht in der Signalverarbeitungseinheiten SV weiterverarbeitet wird. Das in den beiden Sensorfasern SF reflektierte Licht wird von den Sensorfasern SF in die optoelektronischen Bausteine OEC geleitet, in denen das Licht mittels Strahlteiler ST geteilt wird. In jeweils einem ersten Kanal wird das reflektierte Licht mittels Wellenlängenfilter F mit einer Filterkante **K** gefiltert und mittels erster Photodioden PD1 als Schubspannungssignale **S₁, S₂** detektiert. In jeweils einem zweiten Kanal wird das reflektierte Licht direkt auf zweite Photodioden PD2 geleitet und dort als Referenzsignale **S_{R1}, S_{R2}** detektiert, wobei die Referenzsignale S_{R1}, S_{R2} proportional zur gesamten in der jeweiligen Sensorfaser SF1, SF2 reflektierten Lichtleistung ist. Transimpedanzverstärker **V1, V2** wandeln die Schubspannungssignale S₁, S₂ und die Referenzsignale S_{R1}, S_{R2} in Spannungssignale um. Diese können nun weiter verrechnet werden (z. B. durch Tiefpassfilterung). Zur Ermittlung der eigentlichen weiterzuverarbeitenden Signale wird das Verhältnis zwischen dem Differenzsignal S_{D} und dem Referenzsignal S_{R} gebildet. Diese Verhältnissignale werden dann dem Mikrokontroller MC zugeführt, der durch Subtraktion der elektrischen Signale ein Differenzsignal erzeugt.

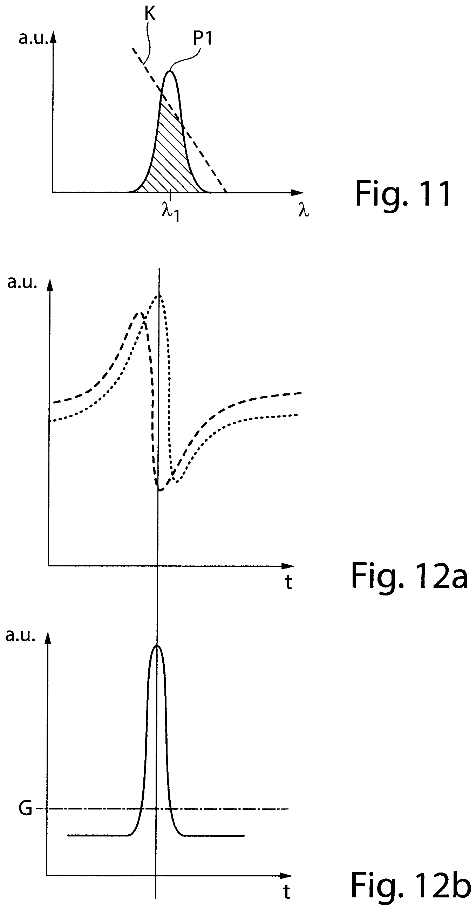

Fig. 11 zeigt einen möglichen Verlauf der ersten Filterkanten K relativ zum ersten Reflexionspeak P1 des ersten Faser-Bragg-Gitters FBG1. Die Filterkante K, verläuft durch die Reflexionspeak P1, so dass sowohl Verschiebungen der Reflexionspeaks zu größeren als auch zu kleineren Wellenlängen eine Änderung der Lichtintensität zur Folge haben, wobei eine Verschiebung des ersten Reflexionspeaks P1 zu größeren Wellenlängen eine Intensitätsabnahme bewirkt, wohingegen eine Verschiebung des ersten Reflexionspeaks P1 zu kleineren Wellenlängen eine Intensitätszunahme bewirkt. Der Verlauf der zweiten Filterkanten K relativ zum zweiten Reflexionspeak P2 des zweiten Faser-Bragg-Gitters FBG2 ist vorzugsweise der gleiche.

**Fig. 12a** zeigt den zeitlichen Verlauf der Schubspannungssignale der beiden Schienenkontakthälften gemäß OE2-Konzept.

Bildet man die Differenz der beiden Schubspannungsverläufe so ist diese maximal, wenn der Lasteintrag in die Schiene durch das Rad genau zwischen den beiden Sensoren stattfindet, wie in **Fig. 12b** gezeigt.

Fig. 13a, 13b zeigen an einer Schiene **S** angebrachte Faser-Bragg-Gitter FBG1, FBG2 zweier Schienenkontakthälften SK1, SK2 gemäß OEC bzw. RR-Konzept. Ein erstes Faser-Bragg-Gitter FBG1 und ein zweites Faser-Bragg-Gitter FBG2 sind jeweils zusammen auf einem Träger **T** an zwei in Schienenrichtung voneinander beabstandeten Sensorstellen **SS1, SS2** angeordnet, der unter Vorspannung an der Schiene S montiert ist. In der in Fig. 13a ist für jede Schienenkontakthälfte SK1, SK2 eine separate Sensorfaser SF vorgesehen, in die das erste Faser-Bragg-Gitter FBG1 und das zweite Faser-Bragg-Gitter FBG2 eingeschrieben sind, wobei die beiden Faser-Bragg-Gitter FBG1, FBG2 voneinander beabstandet sind. Fig. 13b zeigt eine andere Ausführungsform, bei der die Faser-Bragg-Gitter FBG1, FBG2 beider Schienenkontakthälften SK1, SK2 Teil einer einzigen Sensorfaser SF sind. Die Signale werden mittels einer Frequenzweiche **FW** den Signalverarbeitungseinheiten SV der entsprechenden Schienenkontakthälften SK1, SK2 zugeführt. Die vier Faser-Bragg-Gitter FBG1, FBG2 müssen dazu jedoch unterschiedliche Bragg-Wellenlängen aufweisen.

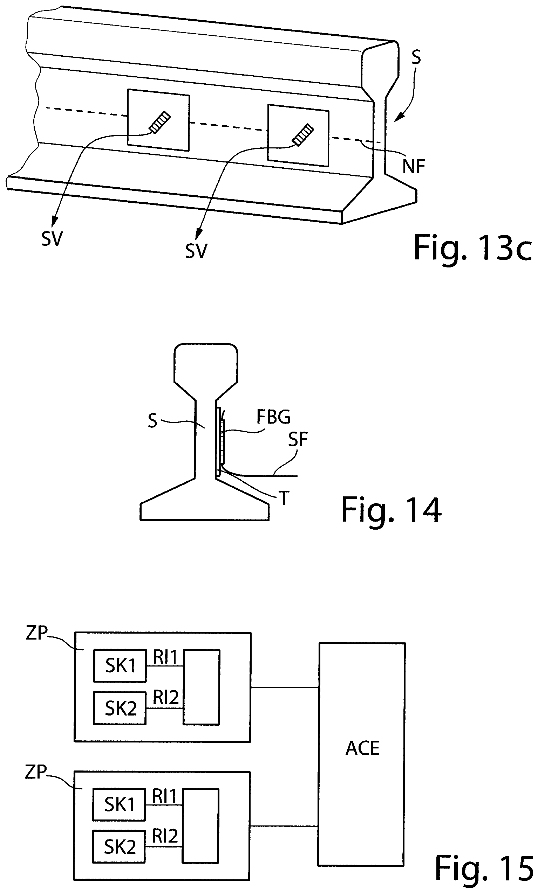

**Fig. 13c** zeigt an einer Schiene angebrachte Faser-Bragg-Gitter zweier Schienenkontakthälften gemäß OE2-Konzept. Jedes Faser-Bragg-Gitter FBG1, FBG2 ist in eine eigene Sensorfaser SF1, SF2 eingeschrieben und jeweils auf einem Träger T vormontiert.

In Fig. 13a und Fig. 13c sind die Faser-Bragg-Gitter FBG1, FBG2 in einem 45° Winkel gegenüber der neutralen Faser **NF** an der Schiene angebracht. Fig. 13b hingegen zeigt eine Ausführungsform, bei der die Faser-Bragg-Gitter FBG1, FBG2 in einem Winkel von -45° gegenüber der neutralen Faser NF an der Schiene angebracht sind. Beide Anbringungsmöglichkeiten sind bei allen drei hier vorgestellten Konzepten möglich. Die unterschiedlichen Orientierungen der Faser-Bragg-Gitter FBG1, FBG2 in Fig. 13a, c einerseits und Fig. 13b andererseits bewirken, dass die Schubspannungssignale und auch das Differenzsignal mit unterschiedlichen Vorzeichen ausgegeben werden. Vorzugsweise wird man eine Orientierung wählen, bei der der Radimpuls als Minimum ausgegeben wird. Vorzugsweise sind die beiden Faser-Bragg-Gitter in einem Abstand von etwa 150 mm zueinander angeordnet. Wenn die beiden Sensorelemente nahe genug beieinander liegen (vorzugsweise näher als 150 mm), erfahren sie auch beide die gleichen Temperaturen, so dass es nicht zu einem unterschiedlichen Temperaturverhalten der Faser-Bragg-Gitter kommt. Außerdem können auf diese Weise Torsionen der Schiene durch laterale Krafteinleitung in den Schienenkopf kompensiert werden.

**Fig. 14** zeigt einen Querschnitt einer Schiene S, an der mittels eines Trägers T mit an der Schiene S angebrachtem Faser-Bragg-Gitter gemäß Fig. 13a-c.

**Fig. 15** zeigt den allgemeinen Aufbau einer erfindungsgemäßen Achszählvorrichtung. Die gezeigte Achszählvorrichtung umfasst zwei Zählpunkte **ZP** mit jeweils zwei Schienenkontakthälften SK1, SK2, wobei jede Schienenkontakthälfte SK1, SK2 einen Radimpuls RI1, RI2 generiert, der innerhalb jedes Zählpunktes an eine Zähleinheit übergeben wird. Aus den Radimpuls RI1, **RI2** kann innerhalb jedes Zählpunktes die Fahrtrichtung ermittelt werden. Die ermittelten Informationen (Radimpulse RI1, RI2, Fahrtrichtung') werden an eine Auswerteeinheit ACE übermittelt.

### Bezugszeichenliste

- ACE: Auswerteeinheit
- F: Wellenlängenfilter
- FBG1, FBG2: Faser-Bragg-Gitter
- FK: Faserkoppler
- FW: Frequenzweiche
- FWHM: Halbwertsbreite
- G: Grenzwert
- K, K1, K2: Filterkanten
- L: Lichtquelle
- MC: Mikrokontroller
- NF: neutrale Faser
- OEC: optoelektronischer Baustein
- P1, P2: Reflexionspeaks
- PD, PD1, PD2: Photodioden
- RI1, RI2: Radimpuls
- SK1, SK2: Schienenkontakthälften
- S: Schiene
- SF: Sensorfaser
- SS1, SS2: Sensorstellen
- ST: Strahlteiler
- SV: Signalverarbeitungseinheit
- S_{D}: Differenzsignal
- S_{R}, S_{R1}, S_{R2}: Referenzsignal
- S₁, S₂: Schubspannungssignale
- T: Träger
- V, V1, V2: Transimpedanzverstärker
- ZP: Zählpunkt
- λ1, λ2: Bragg-Wellenlängen

## Patentansprüche

1. Achszählverfahren für schienengebundene Fahrzeuge mit folgenden Verfahrensschritten
• Einkopplung von Licht in mindestens eine Sensorfaser (SF, SF1, SF2), wobei die Sensorfaser (SF, SF1, SF2) mindestens ein an einer Schiene (T) montiertes Faser-Bragg-Gitter (FBG1, FBG2) umfasst, wobei jedes Faser-Bragg-Gitter (FBG1, FBG2) ein Reflexionspektrum mit einem Reflexionspeak (P1, P2) bei einer Bragg-Wellenlänge (λ1, λ2) mit einer Halbwertsbreite (FWHM) aufweist,
• Detektion des von zwei voneinander beabstandeten Faser-Bragg-Gittern (FBG1, FBG2) reflektierten Lichts, wodurch jeweils ein Schubspannungssignal der Schiene (T) erhalten wird;
• Erzeugen eines Schubspannungs-Differenzsignals aus den beiden erhaltenen Schubspannungssignalen;
• Erzeugung eines Radsignals innerhalb einer Signalverarbeitungseinheit wenn das Schubspannungs-Differenzsignal einen festgelegten oberen Grenzwert (G) überschreitet oder einen festgelegten unteren Grenzwert (G) unterschreitet.

2. Achszählverfahren nach Anspruch 1, **dadurch gekennzeichnet,**
**dass** Sensorfasern (SF) mit jeweils zwei in Reihe angeordneten Faser-Bragg-Gitter (FBG1, FBG2) mit unterschiedlichen Bragg-Wellenlängen (λ1, λ2) an zwei in Schienenrichtung voneinander beabstandeten Sensorstellen (SS1, SS2) verwendet werden, und
**dass** das Erzeugen des Schubspannungs-Differenzsignals optisch mittels eines optoelektronischen Bausteins (OEC) innerhalb einer Signalverarbeitungseinheit (SV) dadurch erfolgt, dass der zeitliche Intensitätsverlauf der in der Sensorfaser (SF) reflektierten Lichtleistung mittels des optoelektronischen Bausteins (OEC) an zwei Filterkanten (K1, K2) eines Wellenlängenfilters des optoelektronischen Bausteins (OEC) gefiltert wird, wobei sich die Filterkanten (K1, K2) jeweils im Bereich einer der Bragg-Wellenlängen (λ1, λ2) der Faser-Bragg-Gitter (FBG1, FBG2) befinden und Steigungen mit unterschiedlichem Vorzeichen aufweisen,
**dass** der gefilterte Intensitätsverlauf als Differenzsignal detektiert wird und
**dass** durch Verarbeitung des Differenzsignals innerhalb einer Signalverarbeitungseinheit Radsignale erzeugt werden.

3. Achszählverfahren nach Anspruch 2, **dadurch gekennzeichnet, dass** die Halbwertsbreiten der Reflexionspeaks (P1, P2) der beiden Faser-Bragg-Gitter (FBG1, FBG2) um weniger als 0.5 nm und ihre Reflektivitäten (R) sich um weniger als 20 % unterscheiden.

4. Achszählverfahren nach Anspruch 2, **dadurch gekennzeichnet, dass** ein Referenzsignal aus der zeitlichen Intensitätsverlaufs der in der Sensorfaser (SF) reflektierten Lichtleistung mittels des optoelektronischen Bausteins (OEC) ungefiltert detektiert wird, und dass das Differenzsignal mit dem Referenzsignal verglichen wird.

5. Achszählverfahren nach Anspruch 1, **dadurch gekennzeichnet,**
**dass** Sensorfasern (SF) mit zwei in Reihe angeordnete Faser-Bragg-Gitter (FBG1, FBG2) mit unterschiedlichen Bragg-Wellenlängen (λ1, λ2) an zwei in Schienenrichtung voneinander beabstandeten Sensorstellen (SS1, SS2) verwendet werden,
**dass** das Erzeugen des Schubspannungs-Differenzsignals optisch durch eine spektrale Überlappung der Reflexionspeaks (P1, P2) der beiden Faser-Bragg-Gitter (FBG1, FBG2) während des Übergangs von einem unbelasteten Zustand zu einem belasteten Zustand erfolgt.

6. Achszählverfahren nach Anspruch 5, **dadurch gekennzeichnet, dass** die Überlappung der Reflexionspeaks im belasteten Zustand erfolgt.

7. Achszählverfahren nach Anspruch 1, **dadurch gekennzeichnet,**
**dass** zwei Sensorfasern (SF1, SF2) mit je einem Faser-Bragg-Gitter (FBG1, FBG2) verwendet werden, wobei die Faser-Bragg-Gitter (FBG1, FBG2) verschiedener Sensorfasern (SF1, SF2) an in Schienenrichtung voneinander beabstandeten Sensorstellen (SS1, SS2) angeordnet sind, und
**dass** für jede Sensorfaser (SF1, SF2) als Schubspannungssignal ein gefiltertes Signal des zeitlichen Intensitätsverlaufs der in der Sensorfaser (SF1, SF2) von dem Faser-Bragg-Gitter (FBG1, FBG2) reflektierten Lichtleistung durch Filterung an jeweils einer Filterkante (K1, K2) eines Wellenlängenfilters eines optoelektronischen Bausteins (OEC) innerhalb einer Signalverarbeitungseinheit (SV) erzeugt wird, und
**dass** die Erzeugung des Schubspannungs-Differenzsignals der beiden Faser-Bragg-Gitter (FBG1, FBG2) elektronisch mittels eines Mikrokontrollers (MC) erfolgt

8. Achszählverfahren nach Anspruch 7, **dadurch gekennzeichnet, dass** ein Referenzsignal aus der zeitlichen Intensitätsverlaufs der in der Sensorfaser (SF) reflektierten Lichtleistung mittels des optoelektronischen Bausteins (OEC) ungefiltert detektiert wird, und dass das Schubspannungssignal aus dem Verhältnis von gefiltertem Signal und Referenzsignal ermittelt wird

9. Achszählverfahren nach einem der vorhergehenden Ansprüche,
**dadurch gekennzeichnet, dass** ein Fehler festgestellt wird, wenn das Referenzsignal einen vorgegebenen **dritten Grenzwert** unterschreitet.

10. Achszählvorrichtung zur Durchführung des Verfahrens nach Anspruch 2 mit
einer Lichtquelle (L),
mindestens einem Zählpunkt (ZP), wobei jeder Zählpunkt (ZP) zwei Schienenkontakthälften (SK1, SK2) zur Montage an einer Schiene (T) umfasst, wobei jede Schienenkontakthälfte (SK1, SK2) umfasst:
- eine Sensorfaser (SF) mit einem ersten Faser-Bragg-Gitter (FBG1) mit einer ersten Bragg-Wellenlänge (λ1)und einem zweiten Faser-Bragg-Gitter (FBG2) mit einer zweiten Bragg-Wellenlänge (λ2), wobei die Faser-Bragg-Gitter (FBG1, FBG2) zur Montage schräg gegenüber der neutralen Faser (NF) an der Schiene (T) ausgebildet sind,
- eine Signalverarbeitungseinheit (SV) mit einem optoelektronischen Baustein (OEC) zur Durchführung einer optischen Subtraktion der von den zwei Faser-Bragg-Gitter (FBG1, FBG2) einer Sensorfaser (SF) reflektierten Lichtleistung, wobei der optoelektronische Baustein (OEC) einen wellenlängenabhängigen Filter (F) mit zwei Filterkanten (K1, K2) umfasst, wobei sich die Filterkanten (K1, K2) jeweils im Bereich einer der Bragg-Wellenlängen (λ1, λ2) der Faser-Bragg-Gitter (FBG1, FBG2) befinden und Steigungen mit unterschiedlichem Vorzeichen aufweisen.

11. Achszählvorrichtung nach Anspruch 10, **dadurch gekennzeichnet,**
**dass** die Steigungen der Filterkanten (K1, K2) betragsmäßig gleich sind.

12. Achszählvorrichtung nach Anspruch 10 oder 11, **dadurch gekennzeichnet, dass** die Faser-Bragg-Gitter (FBG1, FBG2) beider Schienenkontakthälften (SK1, SK2) eines Zählpunktes (ZP) innerhalb einer gemeinsamen Sensorfaser (SF) angeordnet sind.

13. Achszählvorrichtung zur Durchführung des Verfahrens nach Anspruch 4 mit
einer Lichtquelle (L),
mindestens einem Zählpunkt (ZP), wobei jeder Zählpunkt (ZP) zwei Schienenkontakthälften (SK1, SK2) zur Montage an einer Schiene (T) umfasst, wobei jede Schienenkontakthälfte (SK1, SK2) umfasst:
• eine Sensorfaser (SF) mit zwei in Reihe angeordneten Faser-Bragg-Gitter (FBG1, FBG2) an zwei voneinander beabstandeten Sensorstellen (SS1, SS2),
wobei die Faser-Bragg-Gitter (FBG1, FBG2) zur Montage schräg gegenüber der neutralen Faser (NF) an der Schiene (T) ausgebildet sind, und wobei die Bragg-Wellenlängen (λ1, λ2) der beiden Faser-Bragg-Gitter (FBG1, FBG2) und der Abstand der beiden Sensorstellen (SS1, SS2) zueinander so gewählt sind, dass bei einer vorgegebenen Belastung der Schiene (T) zwischen den beiden Sensorstellen (SS1, SS2) sich die Reflexionspeaks (P1, P2) der beiden Faser-Bragg-Gitter (FBG1, FBG2) überlappen,
• eine Signalverarbeitungseinheit (SV) zur Detektion und Weiterverarbeitung des von dem Faser-Bragg-Gitter reflektierten Lichts.

14. Achszählvorrichtung nach Anspruch 13, **dadurch gekennzeichnet,**
**dass** sich die Halbwertsbreiten (FWHM) der Reflexionspeaks (P1, P2) der beiden Faser-Bragg-Gitter (FBG1, FBG2) um 1 bis 2 Größenordnungen unterscheiden.

15. Achszählvorrichtung nach Anspruch 13 oder 14, **dadurch gekennzeichnet, dass** die Bragg-Wellenlängen (λ1, λ2) der beiden Faser-Bragg-Gitter (FBG1, FBG2) sich nicht mehr als 5 nm unterscheiden und dass die Halbwertsbreite (FWHM) eines Faser-Bragg-Gitter (FBG1) mindestens 0,05 nm und die Halbwertsbreite des anderen Faser-Bragg-Gitter (FBG2) höchstens 5 nm beträgt.

16. Achszählvorrichtung zur Durchführung des Verfahrens nach Anspruch 7 mit
einer Lichtquelle (L),
wobei jeder Zählpunkt (ZP) zwei Schienenkontakthälften (SK1, SK2) zur Montage an einer Schiene (T) umfasst, wobei jede Schienenkontakthälfte (SK1, SK2) umfasst:
- eine Sensorfaser (SF1, SF2) mit einem Faser-Bragg-Gitter (FBG1, FBG2) mit einer Bragg-Wellenlänge (λ1, λ2), wobei das Faser-Bragg-Gitter (FBG1, FBG2) zur Montage schräg gegenüber der neutralen Faser (NF) an der Schiene (T) ausgebildet ist,
- eine Signalverarbeitungseinheit (SV) zur Erzeugung von Schubspannungssignalen, wobei die Signalverarbeitungseinheit (SV) einen optoelektronischen Baustein (OEC) mit einer Filterkante (K) umfasst, und
und mit einem Mikrokontroller (MC) zur Erzeugung eines Differenzsignals der von den Signalverarbeitungseinheiten (SV) ausgegebenen Schubspannungssignalen.

17. Achszählvorrichtung nach einem der Ansprüche 10 bis 16, **dadurch gekennzeichnet, dass** die Faser-Bragg-Gitter (FBG1, FBG2) parallel zueinander in einem Winkel ±30° bis ±60°, insbesondere ±45°, zur neutralen Faser (NF) an der Schiene (T) angebracht sind.

18. Achszählvorrichtung nach einem der Ansprüche 10 bis 17, **dadurch gekennzeichnet, dass** die Faser-Bragg-Gitter (FBG1, FBG2) die neutrale Faser (NF) der Schiene (T) kreuzen.

19. Achszählvorrichtung nach einem der Ansprüche 10 bis 18, **dadurch gekennzeichnet, dass** die Faser-Bragg-Gitter (FBG1, FBG2) mit einer Wandlerstruktur zur Kompensation einer Temperaturdehnung der Schiene (T) ausgestattet sind.

20. Achszählvorrichtung nach einem der Ansprüche 10 bis 19, **dadurch gekennzeichnet, dass** die Faser-Bragg-Gitter (FBG1, FBG2) unter Vorspannung an der Schiene (T) befestigt sind.

21. Achszählvorrichtung nach Anspruch 20, **dadurch gekennzeichnet, dass** eine Trimmvorrichtung zum Einstellen der Vorspannung vorgesehen ist, mit der die Faser-Bragg-Gitter (FBG1, FBG2) an die Schiene (T) montiert werden.

22. Achszählvorrichtung nach einem der Ansprüche 10 bis 21, **dadurch gekennzeichnet, dass** die Signalverarbeitungseinheit einen faseroptischen Strahlteiler (ST) umfasst.

## Claims

1. Axle-counting method for railbound vehicles, comprising the following method steps:
• coupling light into at least one sensor fibre (SF, SF1, SF2), wherein the sensor fibre (SF, SF1, SF2) comprises at least one fibre Bragg grating (FBG1, FBG2) mounted on a rail (T), wherein each fibre Bragg grating (FBG1, FBG2) has a reflection spectrum having a reflection peak (P1, P2) which is at a Bragg wavelength (λ1, λ2) and has a full width at half maximum (FWHM),
• detecting the light reflected by two fibre Bragg gratings (FBG1, FBG2) spaced apart from one another, as a result of which a shear stress signal of the rail (T) is received in each case;
• generating a shear stress difference signal from the two received shear stress signals;
• generating a wheel signal within a signal-processing unit if the shear stress difference signal exceeds a predetermined upper limiting value (G) or falls below a predetermined lower limiting value (G).

2. Axle-counting method according to claim 1, **characterised in that** sensor fibres (SF) each having two fibre Bragg gratings (FBG1, FBG2) that are arranged in a row and have different Bragg wavelengths λ1, λ2) are used at two sensor positions (SS1, SS2) that are spaced apart from one another in the rail direction, and
**in that** the shear stress difference signal is generated optically within a signal-processing unit (SV) by means of an optoelectronic component (OEC) by the temporal intensity profile of the light output reflected in the sensor fibre (SF) being filtered at two filter edges (K1, K2) of a wavelength filter of the optoelectronic component (OEC) by means of the optoelectronic component (OEC), the filter edges (K1, K2) each being in the range of one of the Bragg wavelengths (λ1, λ2) of the fibre Bragg grating (FBG1, FBG2) and having gradients having different algebraic signs, and
**in that** the filtered intensity profile is detected as the difference signal, and
**in that** wheel signals are generated by processing the difference signal within a signal-processing unit.

3. Axle-counting method according to claim 2, **characterised in that** the full widths at half maximum of the reflection peaks (P1, P2) of the two fibre Bragg gratings (FBG1, FBG2) differ by less than 0.5 nm, and the reflectivities (R) of said gratings differ by less than 20 %.

4. Axle-counting method according to claim 2, **characterised in that** a reference signal is detected from the temporal intensity profile of the light output reflected in the sensor fibre (SF), without said reference signal being filtered by means of the optoelectronic component (OEC), and **in that** the difference signal is compared with the reference signal.

5. Axle-counting method according to claim 1, **characterised in that** sensor fibres (SF) having two fibre Bragg gratings (FBG1, FBG2) that are arranged in a row and have different Bragg wavelengths (λ1, λ2) are used at two sensor positions (SS1, SS2) that are spaced apart from one another in the rail direction, and
**in that** the shear stress difference signal is generated optically by a spectral overlap of the reflection peaks (P1, P2) of the two fibre Bragg gratings (FBG1, FBG2) during the transition from an unloaded state to a loaded state.

6. Axle-counting method according to claim 5, **characterised in that** the reflection peaks overlap in the loaded state.

7. Axle-counting method according to claim 1, **characterised in that** two sensor fibres (SF1, SF2) each having one fibre Bragg grating (FBG1, FBG2) are used, the fibre Bragg gratings (FBG1, FBG2) of different sensor fibres (SF1, SF2) being arranged at sensor positions (SS1, SS2) that are spaced apart from one another in the rail direction, and
**in that**, for each sensor fibre (SF1, SF2), a filtered signal of the temporal intensity profile of the light output reflected by the fibre Bragg grating (FBG1, FBG2) in the sensor fibre (SF1, SF2) is generated as a shear stress difference signal within a signal-processing unit (SV) by filtration at each filter edge (K1, K2) of a wavelength filter of an optoelectronic component (OEC), and
**in that** the shear stress difference signal of the two fibre Bragg gratings (FBG1, FBG2) is generated electronically by means of a microcontroller (MC).

8. Axle-counting method according to claim 7, **characterised in that** a reference signal is detected from the temporal intensity profile of the light output reflected in the sensor fibre (SF), without said reference signal being filtered by means of the optoelectronic component (OEC), and **in that** the shear stress signal is determined from the ratio of filtered signal to reference signal.

9. Axle-counting method according to any one of the preceding claims, **characterised in that** a fault is identified if the reference signal falls below a predetermined third limiting value.

10. Axle-counting device for performing the method according to claim 2, comprising:
a light source (L),
at least one counting unit (ZP), wherein each counting unit (ZP) comprises two rail-contacting halves (SK1, SK2) for mounting to a rail (T), wherein each rail-contacting half (SK1, SK2) comprises:
- a sensor fibre (SF) comprising a first fibre Bragg grating (FBG1) having a first Bragg wavelength (λ1) and a second fibre Bragg grating (FBG2) having a second Bragg wavelength (λ2), wherein the fibre Bragg gratings (FBG1, FBG2) are designed to be mounted on the rail (T) obliquely with respect to the neutral fibre (NF),
- a signal-processing unit (SV) having an optoelectronic component (OEC) for performing an optical subtraction of the light output reflected by the two fibre Bragg gratings (FBG1, FBG2) of a sensor fibre (SF), wherein the optoelectronic component (OEC) comprises a wavelength-dependent filter (F) having two filter edges (K1, K2), wherein the filter edges (K1, K2) are each in the range of one of the Bragg wavelengths (λ1, λ2) of the fibre Bragg grating (FBG1, FBG2) and have gradients having different algebraic signs.

11. Axle-counting device according to claim 10, **characterised in that** the gradients of the filter edges (K1, K2) are of the same absolute value.

12. Axle-counting device according to either claim 10 or claim 11, **characterised in that** the fibre Bragg gratings (FBG1, FBG2) of the two rail-contacting halves (SK1, SK2) of a counting unit (ZP) are arranged within a common sensor fibre (SF).

13. Axle-counting device for performing the method according to claim 4, comprising:
a light source (L),
at least one counting unit (ZP), wherein each counting unit (ZP) comprises two rail-contacting halves (SK1, SK2) for mounting to a rail (T), wherein each rail-contacting half (SK1, SK2) comprises:
• a sensor fibre (SF), comprising two fibre Bragg gratings (FBG1, FBG2) arranged in a row, at two sensor positions (SS1, SS2) that are spaced apart from one another,
wherein the fibre Bragg gratings (FBG1, FBG2) are designed to be mounted on the rail (T) obliquely with respect to the neutral fibre (NF), and wherein the Bragg wavelengths (λ1, λ2) of the two fibre Bragg gratings (FBG1, FBG2) and the distance between the two sensor positions (SS1, SS2) are selected such that the reflection peaks (P1, P2) of the two fibre Bragg gratings (FBG1, FBG2) overlap when the rail (T) is subjected to a predetermined load between the two sensor positions (SS1, SS2),
• a signal-processing unit (SV) for detecting and subsequently processing the light reflected by the fibre Bragg grating.

14. Axle-counting device according to claim 13, **characterised in that** the full widths at half maximum (FWHM) of the reflection peaks (P1, P2) of the two fibre Bragg gratings (FBG1, FBG2) differ by 1 to 2 orders of magnitude.

15. Axle-counting device according to either claim 13 or claim 14, **characterised in that** the Bragg wavelengths (λ1, λ2) of the two fibre Bragg gratings (FBG1, FBG2) do not differ by more than 5 nm, and **in that** the full width at half maximum (FWHM) of one fibre Bragg grating (FBG1) is at least 0.05 nm and the full width at half maximum of the other fibre Bragg grating (FBG2) is at most 5 nm.

16. Axle-counting device for performing the method according to claim 7, comprising:
a light source (L),
wherein each counting unit (ZP) comprises two rail-contacting halves (SK1, SK2) for mounting on a rail (T), wherein each rail-contacting half (SK1, SK2) comprises:
- a sensor fibre (SF1, SF2) comprising a fibre Bragg grating (FBG1, FBG2) having a Bragg wavelength (λ1, λ2), wherein the fibre Bragg grating (FBG1, FBG2) is designed to be mounted on the rail (T) obliquely with respect to the neutral fibre (NF),
- a signal-processing unit (SV) for generating shear stress signals, wherein the signal-processing unit (SV) comprises an optoelectronic component (OEC) having a filter edge (K),
and
comprising a microcontroller (MC) for generating a difference signal of the shear stress signals emitted by the signal-processing units (SV).

17. Axle-counting device according to any one of claims 10 to 16, **characterised in that** the fibre Bragg gratings (FBG1, FBG2) are attached to the rail (T) in parallel with one another at an angle of from ±30° to ±60°, in particular ±45°, with respect to the neutral fibre (NF).

18. Axle-counting device according to any one of claims 10 to 17, **characterised in that** the fibre Bragg gratings (FBG1, FBG2) intersect the neutral fibre (NF) of the rail (T).

19. Axle-counting device according to any one of claims 10 to 18, **characterised in that** the fibre Bragg gratings (FBG1, FBG2) are equipped with a converter structure for compensating for temperature expansion of the rail (T).

20. Axle-counting device according to any one of claims 10 to 19, **characterised in that** the fibre Bragg gratings (FBG1, FBG2) are fastened to the rail (T) under pretension.

21. Axle-counting device according to claim 20, **characterised in that** a trimming device is provided for adjusting the pretension under which the fibre Bragg gratings (FBG1, FBG2) are mounted onto the rail (T).

22. Axle-counting device according to any one of claims 10 to 21, **characterised in that** the signal-processing unit comprises a fibre-optic beam splitter (ST).

## Revendications

1. Procédé de comptage d'essieux pour véhicules guidés sur rails, comprenant les étapes suivantes :
• injection de lumière dans au moins une fibre de détection (SF, SF1, SF2), laquelle fibre de détection (SF, SF1, SF2) comprend au moins un réseau de Bragg sur fibre (FBG1, FBG2) monté sur un rail (T), chaque réseau de Bragg sur fibre (FBG1, FBG2) présentant un spectre de réflexion avec un pic de réflexion (P1, P2) à une longueur d'onde de Bragg (λ1, λ2) ayant une demi-largeur (FWHM),
• détection de la lumière réfléchie par deux réseaux de Bragg sur fibre (FBG1, FBG2) distants l'un de l'autre, un signal de contrainte de cisaillement du rail (T) étant chaque fois reçu ;
• production d'un signal différentiel de contrainte de cisaillement à partir des deux signaux de contrainte de cisaillement reçus ;
• production d'un signal de roue dans une unité de traitement de signaux lorsque le signal différentiel de contrainte de cisaillement dépasse une valeur limite supérieure définie (G) ou est inférieur à une valeur limite inférieure définie (G).

2. Procédé de comptage d'essieux selon la revendication 1, **caractérisé en ce que** l'on utilise des fibres de détection (SF) présentant chacune deux réseaux de Bragg sur fibre (FBG1, FBG2) de longueurs d'onde de Bragg différentes (λ1, λ2) disposés en série à deux sites de détection (SS1, SS2) distants l'un de l'autre dans la direction du rail, et
que la production du signal différentiel de contrainte de cisaillement est réalisée optiquement au moyen d'un composant optoélectronique (OEC) dans une unité de traitement de signaux (SV) en filtrant la variation d'intensité dans le temps du flux lumineux réfléchi dans la fibre de détection (SF) au moyen du composant optoélectronique (OEC) à deux bords de filtre (K1, K2) d'un filtre de longueur d'onde du composant optoélectronique (OEC), les bords de filtre (K1, K2) se trouvant chaque fois dans la zone d'une des longueurs d'onde de Bragg (λ1, λ2) des réseaux de Bragg sur fibre (FBG1, FBG2) et présentant des pentes de signe différent,
que la variation d'intensité filtrée est détectée en tant que signal différentiel et que des signaux de roue sont produits par traitement du signal différentiel dans une unité de traitement de signaux.

3. Procédé de comptage d'essieux selon la revendication 2, **caractérisé en ce que** les demi-largeurs des pics de réflexion (P1, P2) des deux réseaux de Bragg sur fibre (FBG1, FBG2) diffèrent de moins de 0,5 nm et leurs réflectivités (R) de moins de 20%.

4. Procédé de comptage d'essieux selon la revendication 2, **caractérisé en ce qu'**un signal de référence est détecté sans filtrage au moyen du composant optoélectronique (OEC) à partir de la variation d'intensité dans le temps du flux lumineux réfléchi dans la fibre de détection (SF), et que le signal différentiel est comparé avec le signal de référence.

5. Procédé de comptage d'essieux selon la revendication 1, **caractérisé en ce que** l'on utilise des fibres de détection (SF) présentant deux réseaux de Bragg sur fibre (FBG1, FBG2) de longueurs d'onde de Bragg différente (λ1, λ2) disposés en série à deux sites de détection (SS1, SS2) distants l'un de l'autre dans la direction du rail,
que la production du signal différentiel de contrainte de cisaillement est réalisée optiquement par un recouvrement spectral des pics de réflexion (P1, P2) des deux réseaux de Bragg sur fibre (FBG1, FBG2) pendant la transition d'un état non chargé à un état chargé.

6. Procédé de comptage d'essieux selon la revendication 5, **caractérisé en ce que** le recouvrement des pics de réflexion est effectué à l'état chargé.

7. Procédé de comptage d'essieux selon la revendication 1, **caractérisé en ce que** l'on utilise deux fibres de détection (SF1, SF2) présentant chacune un réseau de Bragg sur fibre (FBG1, FBG2), les réseaux de Bragg sur fibre (FBG1, FBG2) de différentes fibres de détection (SF1, SF2) étant disposés à des sites de détection (SS1, SS2) distants l'un de l'autre dans la direction du rail (SS1, SS2), et
que pour chaque fibre de détection (SF1, SF2), un signal filtré de la variation d'intensité dans le temps du flux lumineux réfléchi par le réseau de Bragg sur fibre (FBG1, FBG2) dans la fibre de détection (SF1, SF2) est produit dans une unité de traitement de signaux (SV) en tant que signal de contrainte de cisaillement par filtrage à un bord de filtre (K1, K2) respectif d'un filtre de longueur d'onde d'un composant optoélectronique (OEC), et
que la production du signal différentiel de contrainte de cisaillement des deux réseaux de Bragg sur fibre (FBG1, FBG2) est réalisée électroniquement au moyen d'un microcontrôleur (MC).

8. Procédé de comptage d'essieux selon la revendication 7, **caractérisé en ce qu'**un signal de référence est détecté sans filtrage au moyen du composant optoélectronique (OEC) à partir de la variation d'intensité dans le temps du flux lumineux réfléchi dans la fibre de détection (SF), et que le signal de contrainte de cisaillement est déterminé à partir du rapport entre le signal filtré et le signal de référence.

9. Procédé de comptage d'essieux selon l'une des revendications précédentes, **caractérisé en ce qu'**une erreur est constatée lorsque le signal de référence est inférieur à une troisième valeur limite prédéfinie.

10. Dispositif de comptage d'essieux pour mettre en oeuvre le procédé selon la revendication 2, comprenant :
une source de lumière (L),
au moins un point de comptage (ZP), chaque point de comptage (ZP) comprenant deux demi-contacts de rail (SKI, SK2) destinés à être montés sur un rail (T),
chaque demi-contact de rail (SKI, SK2) comprenant :
- une fibre de détection (SF) présentant un premier réseau de Bragg sur fibre (FBG1) d'une première longueur d'onde de Bragg (λ1) et un deuxième réseau de Bragg sur fibre (FBG2) d'une deuxième longueur d'onde de Bragg (λ2), les réseaux de Bragg sur fibre (FBG1, FBG2) étant conçus pour être montés obliquement par rapport à la fibre neutre (NF) sur le rail (T),
- une unité de traitement de signaux (SV) comprenant un composant optoélectronique (OEC) pour effectuer une soustraction optique du flux lumineux réfléchi par les deux réseaux de Bragg sur fibre (FBG1, FBG2) d'une fibre de détection (SF), le composant optoélectronique (OEC) comprenant un filtre dépendant de la longueur d'onde (F) avec deux bords de filtre (K1, K2), les bords de filtre (K1, K2) se trouvant chaque fois dans la zone d'une des longueurs d'onde de Bragg (λ1, λ2) des réseaux de Bragg sur fibre (FBG1, FBG2) et présentant des pentes de signe différent.

11. Dispositif de comptage d'essieux selon la revendication 10, **caractérisé en ce que** les pentes des bords de filtre (K1, K2) sont identiques en valeur absolue.

12. Dispositif de comptage d'essieux selon l'une des revendications 10 ou 11, **caractérisé en ce que** les réseaux de Bragg sur fibre (FBG1, FBG2) des deux demi-contacts de rail (SK1, SK2) d'un point de comptage (ZP) sont disposés à l'intérieur d'une fibre de détection (SF) commune.

13. Dispositif de comptage d'essieux pour mettre en oeuvre le procédé selon la revendication 4, comprenant :
une source de lumière (L),
au moins un point de comptage (ZP), chaque point de comptage (ZP) comprenant deux demi-contacts de rail (SK1, SK2) destinés à être montés sur un rail (T),
chaque demi-contact de rail (SK1, SK2) comprenant :
• une fibre de détection (SF) présentant deux réseaux de Bragg sur fibre (FBG1, FBG2) disposés en série à deux sites de détection (SS1, SS2) distants l'un de l'autre,
les réseaux de Bragg sur fibre (FBG1, FBG2) étant conçus pour être montés obliquement par rapport à la fibre neutre (NF) sur le rail (T), et les longueurs d'onde de Bragg (λ1, λ2) des deux réseaux de Bragg sur fibre (FBG1, FBG2) et la distance des deux sites de détection (SS1, SS2) entre eux étant choisies de façon que, lors d'une sollicitation prédéfinie du rail (T) entre les deux sites de détection (SS1, SS2), les pics de réflexion (P1, P2) des deux réseaux de Bragg sur fibre (FBG1, FBG2) se recouvrent,
• une unité de traitement de signaux (SV) pour détecter et traiter la lumière réfléchie par le réseau de Bragg sur fibre.

14. Dispositif de comptage d'essieux selon la revendication 13, **caractérisé en ce que** les demi-largeurs (FWHM) des pics de réflexion (P1, P2) des deux réseaux de Bragg sur fibre (FBG1, FBG2) diffèrent de 1 à 2 ordres de grandeur.

15. Dispositif de comptage d'essieux selon l'une des revendications 13 ou 14, **caractérisé en ce que** les longueurs d'onde de Bragg (λ1, λ2) des deux réseaux de Bragg sur fibre (FBG1, FBG2) ne diffèrent pas de plus de 5 nm et que la demi-largeur (FWHM) d'un réseau de Bragg sur fibre (FBG1) est au moins égale à 0,05 nm et la demi-largeur de l'autre réseau de Bragg sur fibre (FBG2) au plus égale à 5 nm.

16. Dispositif de comptage d'essieux pour mettre en oeuvre le procédé selon la revendication 7, comprenant :
une source de lumière (L),
chaque point de comptage (ZP) comprenant deux demi-contacts de rail (SK1, SK2) destinés à être montés sur un rail (T), chaque demi-contact de rail (SK1, SK2) comprenant :
- une fibre de détection (SF1, SF2) présentant un réseau de Bragg sur fibre (FBG1, FBG2) d'une longueur d'onde de Bragg (λ1, λ2), le réseau de Bragg sur fibre (FBG1, FBG2) étant conçu pour être monté obliquement par rapport à la fibre neutre (NF) sur le rail (T),
- une unité de traitement de signaux (SV) pour produire des signaux de contrainte de cisaillement, l'unité de traitement de signaux (SV) comprenant un composant optoélectronique (OEC) avec un bord de filtre (K),
et comprenant un microcontrôleur (MC) pour produire un signal différentiel des signaux de contrainte de cisaillement délivrés par les unités de traitement de signaux (SV).

17. Dispositif de comptage d'essieux selon l'une des revendications 10 à 16, **caractérisé en ce que** les réseaux de Bragg sur fibre (FBG1, FBG2) sont disposés parallèlement l'un à l'autre à un angle de ±30° à ±60°, en particulier de ±45°, par rapport à la fibre neutre (NF) sur le rail (T).

18. Dispositif de comptage d'essieux selon l'une des revendications 10 à 17, **caractérisé en ce que** les réseaux de Bragg sur fibre (FBG1, FBG2) croisent la fibre neutre (NF) du rail (T).

19. Dispositif de comptage d'essieux selon l'une des revendications 10 à 18, **caractérisé en ce que** les réseaux de Bragg sur fibre (FBG1, FBG2) sont équipés d'une structure de convertisseur pour compenser une dilatation thermique du rail (T).

20. Dispositif de comptage d'essieux selon l'une des revendications 10 à 19, **caractérisé en ce que** les réseaux de Bragg sur fibre (FBG1, FBG2) sont fixés sous précontrainte sur le rail (T).

21. Dispositif de comptage d'essieux selon la revendication 20, **caractérisé en ce qu'**un dispositif d'ajustage pour régler la précontrainte avec laquelle les réseaux de Bragg sur fibre (FBG1, FBG2) sont montés sur le rail (T) est prévu.

22. Dispositif de comptage d'essieux selon l'une des revendications 10 à 21, **caractérisé en ce que** l'unité de traitement de signaux comprend un diviseur de faisceau à fibre optique (ST).
